# FASCICULE DE BREVET EUROPEEN

(11) **EP 2 678 573 B1**
(45) Date de publication et mention de la délivrance du brevet: **03.09.2014**
(21) Numéro de dépôt: 12704873.4
(22) Date de dépôt: 18.01.2012
(51) Int. Cl.: F16C 3/14

(54) **VILEBREQUIN A LUBRIFICATION DES MANETONS OPTIMISEE, MOTEUR ET PROCEDE DE REALISATION DU CIRCUIT DE LUBRIFICATION ASSOCIES**
KURBELWELLE MIT OPTIMIERTER PLEUELZAPFENSCHMIERUNG UND ENTSPRECHENDER MOTOR SOWIE VERFAHREN ZUR HERSTELLUNG DES SCHMIERSYSTEMS
CRANKSHAFT HAVING OPTIMIZED CRANKPIN LUBRICATION, AND RELATED ENGINE AND METHOD FOR PRODUCING THE LUBRICATION SYSTEM

(30) Priorité: 21.02.2011 FR 1151395
(43) Date de publication de la demande: 01.01.2014
(73) Titulaire: Peugeot Citroën Automobiles SA, 78140 Vélizy Villacoublay (FR); GM Global Technology Operations LLC, Detroit, MI 48265-3000 (US)
(72) Inventeur: GOUZONNAT, Fabien, F-92310 Sevres (FR); PAI JOAO, Carlos, F-75014 Paris (FR)
(74) Mandataire: Ménès, Catherine
(86) Numéro de dépôt international: PCT/FR2012/050104
(87) Numéro de publication internationale: WO 2012/114005

(56) Documents cités:
- JP-A- 2006 009 620
- US-A- 5 152 373
- US-A- 5 794 581

## Description

L'invention porte sur le domaine de la lubrification des moteurs à combustion, et plus particulièrement de la lubrification de l'attelage mobile à savoir l'ensemble comportant les pistons, les bielles et le vilebrequin.

Tous les moteurs à combustion comportant des pistons présentent au moins un vilebrequin. Le vilebrequin constitue la manivelle d'un système bielle - manivelle, qui permet de transformer le mouvement alternatif du piston en mouvement de rotation du volant moteur.

Pour assurer la fiabilité de la liaison entre le vilebrequin, au niveau d'un maneton, et la bielle correspondante, il est nécessaire de lubrifier cette liaison. La lubrification consiste à apporter de l'huile sous pression dans cette liaison.

Plus précisément, la rampe d'huile principale du moteur alimente des coussinets de ligne d'arbre / de tourillon, disposés entre le bloc moteur et les tourillons du vilebrequin. Ces coussinets comportent une gorge dans laquelle de l'huile sous pression peut se stocker. Un perçage dans le vilebrequin allant d'un tourillon vers un maneton permet l'alimentation en huile au niveau du maneton de la liaison entre le vilebrequin et la bielle correspondante. On connaît ce type d'architecture par exemple des documents US5152373 et US2955675.

L'architecture de ces conduits d'alimentation doit en outre répondre à certaines contraintes impératives. Le perçage d'alimentation d'un maneton par un tourillon doit affecter le moins possible la résistance mécanique de ce bras. Pour ce faire, il doit passer sensiblement au centre du bras reliant le tourillon au maneton, ce qui se traduit en particulier par un passage central au niveau d'un plan médian de ce bras sensiblement équidistant de l'axe du tourillon et du maneton. En outre, la sortie du conduit de lubrification au niveau d'un maneton doit être réalisée en dehors des zones de fortes contraintes subies par le maneton, sinon le film d'huile assurant la lubrification serait perturbé et la lubrification mal assurée dans ces zones ou elle est primordiale.

Afin d'améliorer la lubrification, il est connu de réaliser un perçage diamétral dans le tourillon. Il s'agit d'un perçage droit, perpendiculaire à l'axe de rotation du vilebrequin, et interceptant ledit axe de rotation. Ainsi, ce perçage diamétral est réalisé selon un diamètre du plan de coupe médian transversal du tourillon, orthogonal à l'axe de rotation du vilebrequin. Ce perçage diamétral peut déboucher en outre au même endroit que le perçage entre le tourillon et le maneton. Le perçage diamétral offre à l'huile sous pression deux entrées dans le vilebrequin, et facilite la circulation de l'huile. L'absence d'un tel perçage peut conduire à une alimentation en huile des manetons discontinue lors d'un cycle moteur, sur 180° de rotation du vilebrequin environ, car le coussinet d'huile formé au niveau du tourillon n'est généralement réalisable que dans la partie supérieure du tourillon (coussinet formé dans la demi-bague supérieure du tourillon), et ce pour des questions d'usure et de tenue mécanique de la demi-bague inférieure du coussinet.

Il est par ailleurs connu, et mis en oeuvre dans certaines applications, d'alimenter en huile de lubrification deux manetons à partir d'un seul tourillon. Cela simplifie grandement le circuit de lubrification, en facilite la réalisation, et réduit les coûts de mise en oeuvre. Le perçage diamétral intercepte alors les deux perçages reliant le tourillon aux deux manetons qu'il alimente. Le perçage diamétral permet notamment d'obtenir l'alimentation des deux manetons sur 360°de rotation du vilebrequin.

Ainsi, le circuit de graissage ou lubrification du vilebrequin tel que connu dans l'état de la technique ne pose pas de problème particulier sur la plupart des moteurs. Toutefois, cette architecture, dans laquelle on alimente deux manetons par un tourillon présentant un perçage diamétral, n'est plus applicable dans certains cas, en particulier par exemple pour certaines conditions de décalage angulaire entre les 2 manetons alimentés associées à des diamètres manetons et/ou tourillons faibles et un rayon de manivelle élevé. La situation peut se présenter par exemple plus couramment dans le cas d'un moteur à 3 cylindres.

Dans ces cas, aucune construction géométrique ne permet de garantir à la fois :
- une position des conduits d'alimentation en huile au niveau des manetons compatible d'une alimentation correcte en huile, en dehors des zones de forte contrainte du maneton.
- un passage du perçage dans une zone des bras vilebrequin qui ne fragilise pas significativement le vilebrequin, et notamment passant sensiblement au centre du bras reliant le maneton et le tourillon.
- un perçage diamétral du tourillon rejoignant les deux perçages venant des manetons

Dans le cadre de moteurs présentant des manetons et/ou des tourillons de faible diamètre avec un décalage angulaire des 2 manetons défavorable, il est donc nécessaire selon les architectures connues dans l'état de la technique de modifier l'architecture du circuit de lubrification dans le vilebrequin soit :
- en supprimant le perçage diamétral du tourillon, mais l'alimentation en huile des bielles est alors affectée. L'alimentation ne se fait alors que pendant une partie du cycle, donc de manière discontinue. Cet inconvénient fait que l'absence de perçage diamétral est rare dans le cas où on alimente deux manetons depuis un seul tourillon.
- en adoptant une architecture dans laquelle chaque tourillon alimente un seul maneton, ce qui présente des inconvénients en termes de complexité et de coût de réalisation, mais engendre aussi une augmentation du débit de fuite au niveau des tourillons

L'invention vise à proposer un vilebrequin présentant une architecture de circuit de lubrification dans le vilebrequin adaptée aux moteurs présentant des diamètres de manetons et/ou de tourillons incompatibles de l'architecture dans laquelle on alimente deux manetons par un tourillon présentant un perçage diamétral (ou plus généralement une architecture incompatible avec un tel perçage diamétral), mais présentant sensiblement les mêmes avantages.

Plus précisément, l'invention porte sur un vilebrequin comportant au moins :
- un tourillon ;
- un premier maneton ;
- un second maneton ;
- un premier bras reliant le premier maneton au tourillon ;
- un second bras reliant le second maneton au tourillon ;
- un premier conduit droit du premier maneton vers le tourillon débouchant en surface du premier maneton au niveau de son plan médian transversal, et passant sensiblement au centre du plan médian du premier bras ;
- un second conduit droit du second maneton vers le tourillon, débouchant en surface du second maneton au niveau de son plan médian transversal, et passant sensiblement au centre du plan médian du second bras ;
dans lequel, le vilebrequin présentant une géométrie telle qu'il ne peut pas comporter en outre un conduit diamétral dans le plan médian transversal du tourillon rejoignant fluidiquement le premier conduit et second conduit, le vilebrequin comporte un troisième conduit droit, non diamétral, dans le plan médian transversal du tourillon, reliant fluidiquement le premier conduit et le second conduit.

Le troisième conduit ainsi percé permet une alimentation sur une plage de rotation du vilebrequin supérieure à 180°, se rapprochant de la lubrification obtenue avec un perçage diamétral.

De préférence, le troisième conduit suit une corde non diamétrale du plan médian transversal du tourillon, la corde non diamétrale débouchant en surface du tourillon de part et d'autre d'un secteur du plan médian transversal du tourillon présentant un angle de secteur compris entre 90° et 180° exclus.

On tend à s'approcher d'un secteur d'angle de 180° (défini par un perçage diamétral), qui est néanmoins exclu car l'invention vise un vilebrequin pour lequel on ne peut réaliser un tel perçage diamétral. En dessous de 90° d'angle de secteur, le troisième perçage est plus complexe et son intérêt moindre (lubrification des manetons sur moins de 270° d'angle de rotation du vilebrequin).

De préférence, les premier et second conduits débouchent en outre en surface du tourillon au niveau de son plan médian transversal. Des conduits débouchant en surface du tourillon sont plus simples à réaliser que des conduits débouchant dans le perçage non diamétral du tourillon.

L'invention porte également sur un moteur comportant un tel vilebrequin. En préférence, l'invention porte du un tel moteur sur le vilebrequin duquel on détermine des zones dites de fortes contraintes en surface des premier et seconds manetons correspondant aux zones du maneton sur lesquelles des efforts supérieurs à un seuil prédéfini sont exercés lors du fonctionnement du moteur, les premier et second conduits débouchant respectivement en surface du premier et second maneton en dehors des zones de fortes contraintes La prise en compte des zones de fortes contraintes constitue une contrainte supplémentaire, au-delà des seules caractéristiques géométriques du vilebrequin, qui peuvent s'opposer à la présence conjointe de conduits de lubrifications ne fragilisant pas les bras de manivelle et d'un perçage d'un conduit diamétral dans le tourillon.

L'invention porte également sur un procédé de réalisation d'un circuit de lubrification de manetons d'un vilebrequin, permettant la réalisation d'un vilebrequin conforme à l'invention), ledit vilebrequin comportant au moins un tourillon, un premier maneton, et un second maneton, un premier bras reliant le premier maneton au tourillon (2) et un second bras reliant le second maneton au tourillon, le vilebrequin présentant une géométrie telle qu'il ne peut pas comporter à la fois :
- un premier conduit droit du premier maneton vers le tourillon et un second conduit droit du second maneton vers le tourillon, les conduits débouchant respectivement en surface du premier et second maneton au niveau de leur plan médian transversal respectif, passant respectivement sensiblement au centre du plan médian des premier et second bras
- un perçage diamétral dans le plan médian transversal du tourillon rejoignant fluidiquement le premier conduit et second conduit ;
caractérisé par les étapes de :
- perçage d'un premier conduit droit du premier maneton vers le tourillon et d'un second conduit droit du second maneton vers le tourillon, es conduits débouchant respectivement en surface du premier et second maneton, au niveau de leur plan médian transversal respectif, et passant respectivement sensiblement au centre du plan médian des premier et second bras ;
- perçage d'un troisième conduit droit, dans le plan médian transversal du tourillon, reliant le premier conduit et le second conduit.

De préférence un tel procédé est appliqué au vilebrequin d'un moteur à combustion, dans lequel on détermine des zones dites de fortes contraintes en surface des premier et second manetons correspondant aux zones du maneton sur lesquelles des efforts supérieurs à un seuil prédéfini sont exercés lors du fonctionnement du moteur, les premier et second conduits débouchant respectivement en surface du premier et second maneton en dehors des zones de fortes contraintes.

L'invention est décrite plus en détail ci-après et en référence aux figures représentant schématiquement l'état de la technique connu ainsi qu'un vilebrequin conforme à un mode de réalisation particulier de l'invention.

La figure 1 présente selon une vue en coupe un moteur à combustion comportant un vilebrequin présentant une architecture connue dans l'état de la technique.

La figure 2a présente schématiquement un tourillon et un maneton d'un vilebrequin, et le circuit de lubrification du maneton selon un premier mode de réalisation connu dans l'état de la technique.

La figure 2b présente schématiquement un tourillon et un maneton d'un vilebrequin, et le circuit de lubrification du maneton selon un deuxième mode de réalisation connu dans l'état de la technique.

La figure 2c présente schématiquement un vilebrequin pour moteur à quatre cylindres, et le circuit de lubrification de ses manetons selon un troisième mode de réalisation connu dans l'état de la technique.

La figure 3 présente une vue schématique transversale d'un tourillon et de deux manetons d'un vilebrequin conforme à celui de la figure 2c, et le circuit de lubrification associé.

La figure 4 présente une vue analogue à celle de la figure 3, pour un vilebrequin d'un moteur à 3 cylindres conforme à un mode de réalisation de l'invention.

La figure 5 présente un vilebrequin d'un moteur à 3 cylindres, conforme à l'invention.

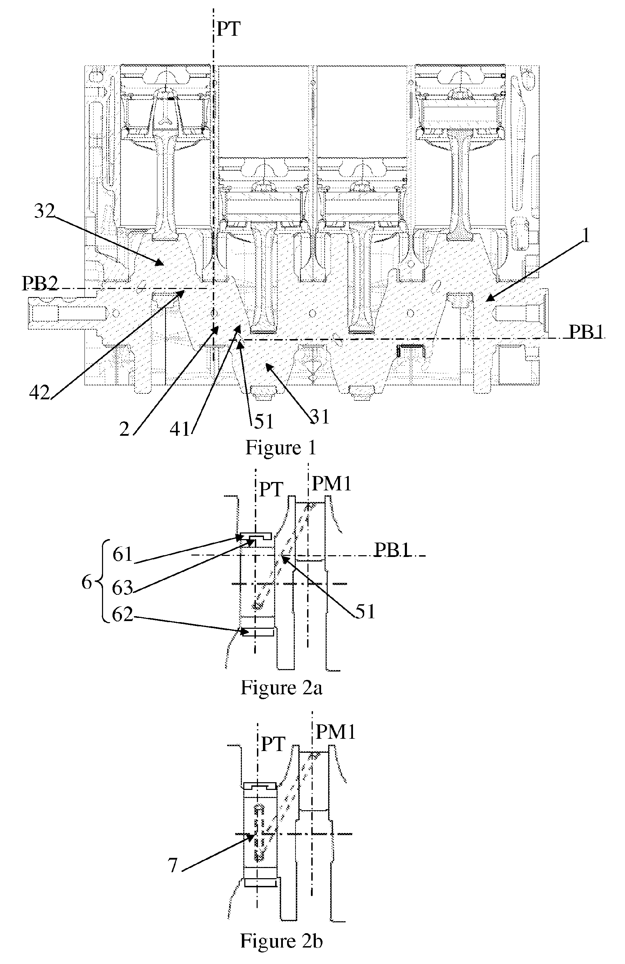

En figure 1 on a représenté un moteur à combustion du type à quatre cylindres en ligne, selon une vue en coupe longitudinale de son vilebrequin 1.

Le vilebrequin 1 présente un tourillon 2, de part et d'autre duquel sont positionnés un premier maneton 31 et un second maneton 32. Un premier bras 41 relie le tourillon 2 au premier maneton 31. Un second bras 42 relie le tourillon 2 au second maneton 32.

Un circuit de lubrification permet d'alimenter en huile de lubrification les manetons à partir des tourillons. Dans le cadre du moteur ici représenté, chaque maneton est alimenté par un tourillon différent. Le premier maneton 31 est alimenté par le tourillon 2. Pour ce faire, un premier conduit 51 droit, passant sensiblement au centre du plan médian PB1 du premier bras 41, est ménagé entre le tourillon 2 et le premier maneton 31. Le premier conduit 51 débouche d'une part en surface du tourillon 2 au niveau de son plan médian transversal PT, et d'autre part en surface du premier maneton 31 au niveau de son plan médian transversal.

La figure 2a présente schématiquement un tourillon et un maneton d'un vilebrequin, et le circuit de lubrification du maneton selon un premier mode de réalisation connu dans l'état de la technique, qui correspond au mode de réalisation du vilebrequin de la figure 1.

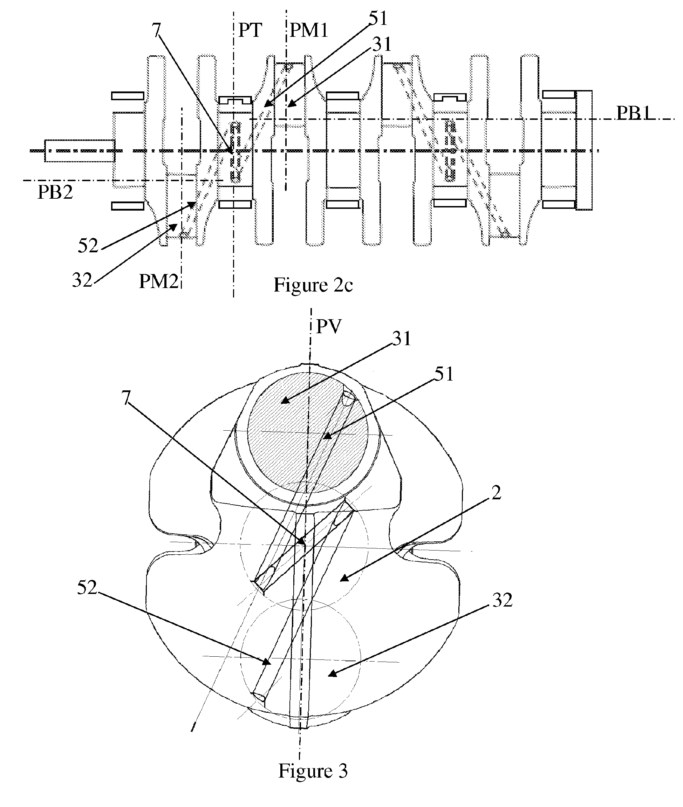

On retrouve en figure 2 l'ensemble des informations et références présentés en figure 1, ainsi que le détail du coussinet de ligne d'arbre 6, comportant une demi-bague supérieure 61 et une demi-bague inférieure 62. La demi-bague supérieure 61 ménage une réserve d'huile 63, qui peut pénétrer dans le premier conduit 51 pendant que l'embouchure dudit premier conduit 51 est en vis-à-vis de la demi-bague supérieure, c'est-à-dire pendant environ 180° de rotation du vilebrequin.

La figure 2b présente schématiquement un tourillon et un maneton d'un vilebrequin, et le circuit de lubrification du maneton selon un deuxième mode de réalisation connu dans l'état de la technique. Selon ce mode de réalisation, un perçage diamétral 7 du tourillon est réalisé, partant de l'embouchure du premier perçage 51. Ainsi, le circuit de lubrification constitué du premier perçage et du perçage diamétral 7 est alimenté par la réserve d'huile 63 sur 360° (ou quasiment 360°) de rotation du vilebrequin. La lubrification du maneton est ainsi assurée de manière continue, gage de meilleure fiabilité et d'une usure moindre.

La figure 2c présente schématiquement un vilebrequin 1 pour moteur à quatre cylindres, et le circuit de lubrification de ses manetons selon un troisième mode de réalisation connu dans l'état de la technique. Dans cette variante, en plus du premier conduit 51 alimentant le premier maneton 31, un second conduit 52 alimente un second maneton 32 depuis le même tourillon 2. Le second conduit 52 répond aux mêmes exigences que le premier conduit 51. Il passe sensiblement au centre du plan médian PB2 du second bras 42. Le second conduit 52 débouche d'une part en surface du tourillon 2 au niveau de son plan médian transversal PT, et d'autre part en surface du second maneton 32 au niveau de son plan médian transversal. Dans l'état de la technique connu, et tel que représenté dans la variante ici décrite, le second conduit 52 débouche en surface du tourillon 2 en un point diamétralement opposé de l'embouchure du premier conduit 51, de sorte à relier l'embouchure du premier conduit 51 et celle du second conduit 52 par un perçage diamétral 7.

Le perçage diamétral 7 permet donc l'alimentation du circuit (et donc des deux manetons) pendant 360° de la rotation du vilebrequin 1.

La figure 3 présente une vue schématique transversale d'un tourillon et de deux manetons d'un vilebrequin conforme à celui de la figure 2c, et le circuit de lubrification associé. On visualise sur cette figure le positionnement des conduits et du perçage diamétral 7. L'embouchure du premier (respectivement second) conduit 51 (respectivement 52) au niveau du maneton est positionnée dans une zone dite de faibles charges, c'est-à-dire une zone du maneton subissant des efforts inférieurs à un seuil prédéfini lors du fonctionnement du moteur équipé du moteur 1. Par opposition, les zones de fortes charges desquels on éloigne l'embouchure des premier et second conduits correspondent à des zones subissant des efforts importants pendant le fonctionnement du moteur, de sorte que le film d'huile assurant la lubrification dans ces zones doit être particulièrement régulier et ne pas être perturbé. On ne peut donc positionner l'embouchure des conduits de lubrification dans ces zones. Ces considérations expliquent le positionnement décalé de l'embouchure par rapport au plan de symétrie PV du vilebrequin.

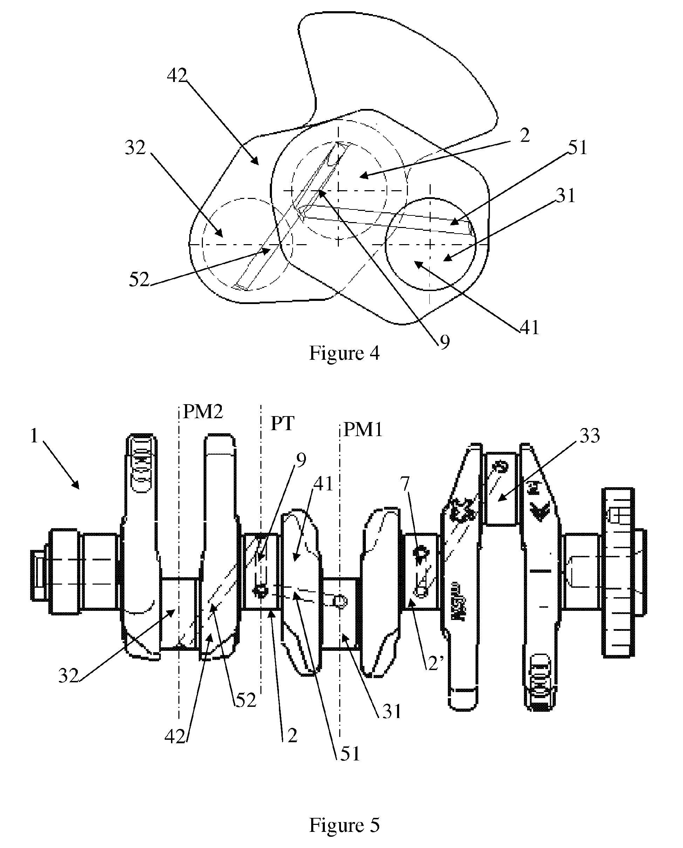

La figure 4 présente une vue analogue à celle de la figure 3, pour un vilebrequin d'un moteur à 3 cylindres conforme à un mode de réalisation de l'invention.

Dans l'invention, un premier conduit 51 droit passant sensiblement au centre du plan médian du premier bras 41, est ménagé entre le tourillon 2 et le premier maneton 31. Le premier conduit 51 débouche en surface du premier maneton 31 au niveau de son plan médian transversal.

Un second conduit droit 52 passant sensiblement au centre du plan médian du second bras 42, est ménagé entre le tourillon 2 et le second maneton 32. Le second conduit 52 débouche en surface du second maneton 32 au niveau de son plan médian transversal.

Dans l'invention, on relie fluidiquement le premier conduit 51 au second conduit 52, au niveau du plan médian transversal du tourillon PT, par un perçage non diamétral formant un troisième conduit 9. Le troisième conduit 9 est ainsi percé selon une corde non diamétrale du plan médian transversal du tourillon PT.

De préférence, la corde non diamétrale débouche en surface du tourillon de part et d'autre d'un secteur du plan médian transversal du tourillon PT présentant un angle de secteur compris entre 90° et 180° exclus. La valeur de 180° est bien évidemment exclue car il s'agirait d'un diamètre, or l'invention s'applique à un vilebrequin ne pouvant présenter un tel perçage diamétral. En dessous de 90 il n'est pas totalement exclu mais devient techniquement difficile de réaliser un perçage entre les embouchures des premier et second conduits, car cela permet une alimentation du circuit de lubrification sur moins de 270° de rotation du vilebrequin. En d'autres termes le rapport entre la complexité technique et l'effet bénéfique obtenu devient moins favorable.

La figure 5 présente un vilebrequin 1 d'un moteur à 3 cylindres, conforme à l'invention. Sur cette application, un premier maneton 31 et un second maneton 32 sont alimentés par un tourillon 2 unique, présentant un troisième perçage 9 non diamétral. Le troisième maneton 33 est alimenté par l'autre tourillon 2', qui lui peut présenter un perçage diamétral 7, assurant la lubrification du maneton sur 360° de rotation du vilebrequin.

Le perçage du troisième conduit 9 droit non diamétral peut être obtenu par le même procédé de perçage que celui employé pour le perçage des premier et second conduits. Le troisième conduit 9 non diamétral est donc décalé par rapport au centre du tourillon (centre du plan médian circulaire du tourillon PT).

Cela offre de nombreux avantages inconnus dans l'état de la technique. Ce décalage du perçage par rapport au centre, qui peut dépasser 1 mm (et peut atteindre plusieurs mm) offre des degrés de liberté pour le positionnement des perçages venant des manetons, tout en garantissant une lubrification des manetons sur une plage de rotation étendue du vilebrequin 1.

Les degrés de liberté donnés au positionnement des perçages venant des manetons permettent de conserver une architecture de lubrification de deux manetons par un tourillon, sans la prise de risque sur la lubrification qui serait liée à absence de perçage dans le tourillon. L'invention permet ainsi de quasiment combiner les avantages du graissage de deux manetons par un seul tourillon (notamment une optimisation de la perméabilité du circuit de graissage) et du perçage diamétral (une alimentation quasi-continue des manetons en huile).

## Revendications

1. Vilebrequin (1) comportant au moins :
- un tourillon (2) ;
- un premier maneton (31) ;
- un second maneton (32) ;
- un premier bras (41) reliant le premier maneton (31) au tourillon (2) ;
- un second bras (42) reliant le second maneton (32) au tourillon (2) ;
- un premier conduit (51) droit du premier maneton vers le tourillon (2) débouchant en surface du premier maneton (31) au niveau de son plan médian transversal (PM1), et passant sensiblement au centre du plan médian du premier bras (PB1) ;
- un second conduit (52) droit du second maneton vers le tourillon (2), débouchant en surface du second maneton (32) au niveau de son plan médian transversal (PM2), et passant sensiblement au centre du plan médian du second bras (PB2) ;
caractérisé en ce, le vilebrequin (1) présentant une géométrie telle qu'il ne peut pas comporter en outre un conduit diamétral (7) dans le plan médian transversal du tourillon (PT) rejoignant fluidiquement le premier conduit (51) et second conduit (52), le vilebrequin comporte un troisième conduit (9) droit, non diamétral, dans le plan médian transversal du tourillon (PT), reliant fluidiquement le premier conduit (51) et le second conduit (52).

2. Vilebrequin selon la revendication 1, dans lequel le troisième conduit (9) suit une corde non diamétrale du plan médian transversal du tourillon (PT), la corde non diamétrale débouchant en surface du tourillon (2) de part et d'autre d'un secteur du plan médian transversal du tourillon (PT) présentant un angle de secteur compris entre 90° et 180° exclus.

3. Vilebrequin selon la revendication 1 ou la revendication 2, dans lequel les premier et second conduits (51, 52) débouchent en outre en surface du tourillon (2), au niveau de son plan médian transversal (PT).

4. Moteur comportant un vilebrequin selon l'une des revendications précédentes.

5. Moteur selon la revendication 4, sur le vilebrequin (1) duquel on détermine des zones dites de fortes contraintes en surface des premier et seconds manetons (31,32) correspondant aux zones du maneton (31, 32) sur lesquelles des efforts supérieurs à un seuil prédéfini sont exercés lors du fonctionnement du moteur, les premier et second conduits (51, 52) débouchant respectivement en surface du premier et second maneton (31, 32) en dehors des zones de fortes contraintes.

6. Procédé de réalisation d'un circuit de lubrification de manetons d'un vilebrequin (1) comportant au moins un tourillon (2), un premier maneton (31), et un second maneton, un premier bras (41) reliant le premier maneton au tourillon (2) et un second bras (42) reliant le second maneton au tourillon (2), le vilebrequin (1) présentant une géométrie telle qu'il ne peut pas comporter à la fois :
• un premier conduit (51) droit du premier maneton vers le tourillon (2) et un second conduit (52) droit du second maneton vers le tourillon (2), les conduits débouchant respectivement en surface du premier et second maneton (31, 32) au niveau de leur plan médian transversal respectif (PM1, PM2), et passant respectivement sensiblement au centre du plan médian des premier et second bras (41, 42) ;
• un perçage diamétral dans le plan médian transversal du tourillon (PT) rejoignant fluidiquement le premier conduit (51) et second conduit (52) ;
**caractérisé par** les étapes de :
• perçage d'un premier conduit (51) droit du premier maneton vers le tourillon (2) et d'un second conduit (52) droit du second maneton vers le tourillon (2), les conduits débouchant respectivement en surface du premier et second maneton (31, 32), au niveau de leur plan médian transversal respectif (PM1, PM2), et passant respectivement sensiblement au centre du plan médian des premier et second bras (PB1, PB2);
• perçage d'un troisième conduit (9) droit, dans le plan médian transversal du tourillon (PT), reliant le premier conduit (51) et le second conduit (52).

7. Procédé selon la revendication 6 appliqué au vilebrequin (1) d'un moteur à combustion, dans lequel on détermine des zones dites de fortes contraintes en surface des premier et second manetons (31,32) correspondant aux zones du maneton (31, 32) sur lesquelles des efforts supérieurs à un seuil prédéfini sont exercés lors du fonctionnement du moteur, les premier et second conduits (51, 52) débouchant respectivement en surface du premier et second maneton (31, 32) en dehors des zones de fortes contraintes.

## Patentansprüche

1. Kurbelwelle (1), die mindestens Folgendes aufweist:
- einen Zapfen (2);
- einen ersten Pleuelzapfen (31);
- einen zweiten Pleuelzapfen (32);
- einen ersten Arm (41), der den ersten Pleuelzapfen (31) mit dem Zapfen (2) verbindet;
- einen zweiten Arm (42) der den zweiten Pleuelzapfen (32) mit dem Zapfen (2) verbindet;
- eine erste gerade Leitung (51) von dem ersten Pleuelzapfen bis zu dem Zapfen (2), die auf der Oberfläche des ersten Pleuelzapfens (31) auf dem Niveau seiner mittleren Querebene (PM1) mündet und im Wesentlichen in der Mitte der mittleren Ebene des ersten Arms (PB1) verläuft;
- eine zweite gerade Leitung (52) des zweiten Pleuelzapfens zu dem Zapfen (2), die auf der Oberfläche des zweiten Pleuelzapfens (32) auf dem Niveau seiner mittleren Querebene (PM2) mündet und im Wesentlichen in der Mitte der mittleren Ebene des zweiten Arms (PB2) verläuft;
**dadurch gekennzeichnet, dass** die Kurbelwelle (1) eine Geometrie derart aufweist, dass sie ferner keine diametrale Leitung (7) in der mittleren Querebene des Zapfens (PT) aufweisen kann, die die erste Leitung (51) und die zweite Leitung (52) fluidtechnisch verbindet, wobei die Kurbelwelle eine dritte gerade Leitung (9), die nicht diametral ist, in der mittleren Querebene des Zapfens (PT) aufweist, die die erste Leitung (51) und die zweite Leitung (52) fluidtechnisch verbindet.

2. Kurbelwelle nach Anspruch 1, bei der die dritte Leitung (9) einer nicht diametralen Sehne der mittleren Querebene des Zapfens (PT) folgt, wobei die nicht diametrale Sehne auf der Oberfläche des Zapfens (2) auf jeder Seite eines Sektors der mittleren Querebene des Zapfens (PT), die einen Sektorwinkel ausschließlich zwischen 90° und 180° aufweist, mündet.

3. Kurbelwelle nach Anspruch 1 oder Anspruch 2, bei der die erste und die zweite Leitung (51, 52) ferner auf der Oberfläche des Zapfens (2) auf dem Niveau seiner mittleren Querebene (PT) münden.

4. Motor, der eine Kurbelwelle nach einem der vorhergehenden Ansprüche aufweist.

5. Motor nach Anspruch 4, auf dessen Kurbelwelle (1) man Zonen mit starken Oberflächenspannungen des ersten und des zweiten Pleuelzapfens (31, 32) bestimmt, die den Zonen der Pleuelzapfen (31, 32) entsprechen, auf welchen Kräfte größer als ein vorbestimmter Schwellenwert beim Betrieb des Motors ausgeübt werden, wobei die erste und die zweite Leitung (51, 52) jeweils auf der Oberfläche des ersten und des zweiten Pleuelzapfens (31, 32) außerhalb der Zonen mit starken Spannungen münden.

6. Herstellungsverfahren eines Pleuelzapfen-Schmierkreislaufs einer Kurbelwelle (1), der mindestens einen Zapfen (2), einen ersten Pleuelzapfen (31), einen zweiten Pleuelzapfen, einen ersten Arm (41), der den ersten Pleuelzapfen mit dem Zapfen (2) verbindet, und einen zweiten Arm (42), der den zweiten Pleuelzapfen mit dem Zapfen (2) verbindet, aufweist, wobei die Kurbelwelle (1) eine Geometrie derart aufweist, dass sie Folgendes nicht gleichzeitig aufweisen kann:
• eine erste gerade Leitung (51) von dem ersten Pleuelzapfen zu dem Zapfen (2) und eine zweite gerade Leitung (52) von dem zweiten Pleuelzapfen zu dem Zapfen (2), wobei die Leitungen jeweils auf der Oberfläche des ersten und des zweiten Pleuelzapfens (31, 32) auf dem Niveau seiner jeweiligen mittleren Querebene (PM1, PM2) münden und jeweils im Wesentlichen in der Mitte der mittleren Ebene des ersten und des zweiten Arms (41, 42) verlaufen;
• eine diametrale Bohrung in der mittleren Querebene des Zapfens (PT), die die erste Leitung (51) und die zweite Leitung (52) fluidtechnisch verbindet;
**gekennzeichnet durch** die folgenden Schritte:
• Bohren einer ersten geraden Leitung (51) von dem ersten Pleuelzapfen zu dem Zapfen (2) und einer zweiten geraden Leitung (52) von dem zweiten Pleuelzapfen zu dem Zapfen (2), wobei die Leitungen jeweils auf der Oberfläche des ersten und des zweiten Pleuelzapfens (31, 32) auf dem Niveau seiner jeweiligen mittleren Querebene (PM1, PM2) münden und jeweils im Wesentlichen in der Mitte der mittleren Ebene des ersten und des zweiten Arms (PB1, PB2) verlaufen,
• Bohren einer dritten geraden Leitung (9) in der mittleren Querebene des Zapfens (PT), die die erste Leitung (51) und die zweite Leitung (52) verbindet.

7. Verfahren nach Anspruch 6, angewandt an die Kurbelwelle (1) einer Brennkraftmaschine, bei dem man so genannte Zonen mit starken Spannungen an der Oberfläche des ersten und des zweiten Pleuelzapfens (31, 32) bestimmt, die Zonen der Pleuelzapfen (31, 32) entsprechen, auf welche beim Betrieb des Motors Kräfte, die größer sind als ein vorbestimmter Schwellenwert, einwirken, wobei die erste und die zweite Leitung (51, 52) jeweils auf der Oberfläche des ersten und des zweiten Pleuelzapfens (31, 32) außerhalb der Zonen mit hohen Spannungen münden.

## Claims

1. A crankshaft (1) comprising at least:
- a journal (2);
- a first crankpin (31);
- a second crankpin (32);
- a first arm (41) connecting the first crankpin (31) to the journal (2);
- a second arm (42) connecting the second crankpin (32) to the journal (2);
- a first straight duct (51) from the first crankpin toward the journal (2), opening at the surface of the first crankpin (31) at the level of its transverse median plane (PM1), and passing substantially to the centre of the median plane of the first arm (PB1);
- a second straight duct (52) from the second crankpin toward the journal (2), opening at the surface of the second crankpin (32) at the level of its transverse median plane (PM2), and passing substantially to the centre of the median plane of the second arm (PB2);
**characterized in that**, the crankshaft (1) having a geometry such that it can not additionally comprise a diametric duct (7) in the transverse median plane of the journal (PT) fluidically joining the first duct (51) and the second duct (52), the crankshaft comprises a third straight, non-diametric, duct (9), in the transverse median plane of the journal (PT), fluidically connecting the first duct (51) and the second duct (52).

2. The crankshaft according to claim 1, in which the third duct (9) follows a non-diametric chord of the transverse median plane of the journal (PT), the non-diametric chord opening at the surface of the journal (2) on both sides of a sector of the transverse median plane of the journal (PT), exhibiting a sector angle comprised between 90° and 180° exclusive.

3. The crankshaft according to claim 1 or claim 2, in which the first and second ducts (51, 52) open in addition at the surface of the journal (2), at the level of its transverse median plane (PT).

4. An engine comprising a crankshaft according to one of the preceding claims.

5. The engine according to claim 4, on the crankshaft (1) of which zones designated as zones of high stress are determined at the surface of the first and second crankpins (31, 32) corresponding to the zones of the crankpin (31, 32) on which forces greater than a predefined threshold are exerted during the operation of the engine, the first and second ducts (51, 52) opening respectively at the surface of the first and second crankpin (31, 32) outside the zones of high stress.

6. A method for producing a lubrication circuit of crankpins of a crankshaft (1) comprising at least one journal (2), a first crankpin (31), and a second crankpin, a first arm (41) connecting the first crankpin to the journal (2), and a second arm (42) connecting the second crankpin to the journal (2), the crankshaft (1) having a geometry such that it can not simultaneously comprise:
• a first straight duct (51) from the first crankpin toward the journal (2) and a second straight duct (52) from the second crankpin toward the journal (2), the ducts opening respectively at the surface of the first and second crankpin (31, 32) at the level of their respective transverse median plane (PM1, PM2), and passing respectively substantially to the centre of the median plane of the first and second arms (41, 42);
• a diametric bore in the transverse median plane of the journal (PT) fluidically joining the first duct (51) and the second duct (52);
**characterized by** the steps of:
• drilling of a first straight duct (51) from the first crankpin toward the journal (2) and of a second straight duct (52) from the second crankpin toward the journal (2), the ducts opening respectively at the surface of the first and second crankpin (31, 32), at the level of their respective transverse median plane (PM1, PM2), and passing respectively substantially to the centre of the median plane of the first and second arms (PB1, PB2);
• drilling of a third straight duct (9), in the transverse median plane of the journal (PT), connecting the first duct (51) and the second duct (52).

7. The method according to Claim 6 applied to the crankshaft (1) of an internal combustion engine, in which zones designated as zones of high stress are determined at the surface of the first and second crankpins (31, 32) corresponding to the zones of the crankpin (31, 32) on which forces greater than a predetermined threshold are exerted during the operation of the engine, the first and second ducts (51, 52) opening respectively at the surface of the first and second crankpin (31, 32) outside the zones of high stress.
